# EUROPEAN PATENT SPECIFICATION

(11) **EP 0 620 110 B1**
(45) Date of publication and mention of the grant of the patent: **17.07.2002**
(21) Application number: 93921101.7
(22) Date of filing: 01.10.1993
(51) Int. Cl.: B32B 15/08, G10K 11/168

(54) **USE OF A MULTIL-LAYER LAMINATE AS A VIBRATION-DAMPING BOARD AND/OR ACOUSTIC INSULATION MATERIAL**
VERWENDUNG EINES MEHRSCHICHTIGES SCHICHTSTOFFS ALS VIBRATIONSDAEMPFUNGSPLATTE UND/ODER SCHALLISOLIERENDES MATERIAL
UTILISATION D'UN STRATIFIE MULTICOUCHE COMME PANNEAU AMORTISSEUR DE VIBRATIONS ET/OU MATERIAU INSONORISANT

(30) Priority: 02.10.1992 JP 26482592
(43) Date of publication of application: 19.10.1994
(73) Proprietor: Sumitomo Chemical Company, Limited, Chuo-ku Osaka 541-8550 (JP)
(72) Inventor: SUZUKI, Seiji 523, Yagoto Tendo, Nagoya-shi Aichi 468 (JP); KIKUCHI, Toshitsugu 2-11-8-310, Sonehigashinocho, Osaka 561 (JP)
(74) Representative: VOSSIUS & PARTNER
(86) International application number: JP9301410
(87) International publication number: WO9407689

(56) References cited:
- EP-A- 0 447 642
- WO-A-90/05633
- FR-A- 2 279 545
- JP-A- 57 070 648
- JP-A- 57 201 650
- JP-U- 62 065 210
- US-A- 4 390 489
- DATABASE WPI Week 9237, Derwent Publications Ltd., London, GB; AN 92-302644 (37) & JP-A-4 207 139 (TORAY IND INC) 29 July 1992
- DATABASE WPI Week 9117, Derwent Publications Ltd., London, GB; AN 91-120537 (17) & JP-A-3 058 836 (SUMITOMO BAKELITE KK) 14 March 1991

## Description

### TECHNICAL FIELD

The present invention relates to the use of a multilayer laminate obtained by laminating a fiber-reinforced thermoplastic resin layer containing reinforcing fiber, on one or each side of an aluminum plate.

### BACKGROUND ART

Metal plates are characterized by having an excellent mechanical strength and have heretofore been used as various materials. But, they are not sufficiently light in weight, are subject to rusting and corrosion because of their low water resistance and chemical resistance, and have been unsuitable for use as vibration-damping boards, acoustic insulation materials, etc. because of direct reflection of vibrations, sounds, etc. from the outside on the metal plates.

As materials free from such defects of the metal plates, there are known, for example, laminates obtained by coating or plating one side or both sides of a metal plate with a resin for preventing rusting and corrosion.

However, although such laminates possess somewhat improved resistance to rusting and corrosion, they involve the following problem: because of their very thin resin layer(s), pinholes are formed, or the resin layer is injured by a slight impact, so that a metal portion is exposed to be rusted. Therefore, they cannot be said to be stable to rusting and corrosion for a long period of time.

Moreover, they have been unusable as impact-resistant boards, vibration-damping boards, acoustic insulation materials, etc. because impacts, vibrations, sounds, etc. from the outside are reflected on the metal plate without absorption and reduction.

### DISCLOSURE OF THE INVENTION

In view of such conditions, the present inventors earnestly investigated for solving such problems and developing a multilayer laminate whose metal plate is not rusted or attacked by exposure of a metal portion due to a pinhole or a scratch and which are utilized as an vibration-damping board and acoustic insulation material. Consequently, the present invention has been accomplished.

The present invention relates to the use of a multilayer laminate as claimed in claim 1 which it is obtained by laminating a fiber-reinforced thermoplastic resin layer containing reinforcing fiber, on one or each side of a metal plate.

### BRIEF DESCRIPTION OF THE DRAWINGS

Fig. 1(A) shows an impact and vibration equipment, and Fig. 1(B) shows an outline of a method for measuring vibration and noise by means of said equipment.
Fig. 2 is a chart showing the results of measuring the noise level of the multilayer laminate obtained in Example 4.
Fig. 3 is a chart showing the results of measuring the noise level of a steel plate alone in Comparative Example 1.
Fig. 4 is a chart showing the results of measuring the vibration of the multilayer laminate obtained in Example 4.
Fig. 5 is a chart showing the results of measuring the vibration of the steel plate alone in Comparative Example 1.

### BEST MODE FOR CARRYING OUT THE INVENTION

In the multilayer laminate used according to the present invention, the metal plate is made of aluminum. The thickness and shape of the metal plate are not critical and are properly chosen depending on purpose of use.

The fiber-reinforced thermoplastic resin layer(s) containing reinforcing fiber is composed of the fiber for giving added strength (the reinforcing fiber) and any of various thermoplastic resins which constitutes a matrix.

As the reinforcing fiber, there are usually used inorganic fibers such as glass fiber, carbon fiber, alumina fiber, etc. In particular, glass fiber is preferably used.

Although the fiber length of the reinforcing fiber is not critical, it is preferably 1 mm or more, particularly preferably 10 mm or more, from the viewpoint of the performance characteristics of the multilayer laminate.

As the thermoplastic resin, there are exemplified various thermoplastic resins such as polypropylenes, polyesters, etc.

Although a combination of the above-exemplified reinforcing fiber and thermoplastic resin is properly determined depending on each purpose of use, a fiber-reinforced thermoplastic resin composed of a combination of glass fiber and a polypropylene is usually used.

The blending proportions of the two are properly chosen in a well-known range employed for producing a fiber-reinforced thermoplastic resin.

The multilayer laminate used in the present invention is obtained by laminating a fiber-reinforced thermoplastic resin layer on one or each side of a metal plate, as described above. It may have either a two-layer structure produced by forming the resin layer only on one side of the metal plate, or a three-layer structure produced by forming the resin layer on each side of the metal plate. Depending on purpose of use, the multilayer laminate may have a four-layer or higher-order structure produced by laminating metal plate(s) and resin layer(s) alternately on one or each side of a multilayer laminate having the two- or three-layer structure. A multilayer laminate having a fiber-reinforced thermoplastic resin layer as outermost layer is preferable for the purpose. A multilayer laminate having the three-layer structure produced by forming the resin layer on each side of the metal plate is particularly preferable.

In such a multilayer laminate, the thickness of the fiber-reinforced thermoplastic resin layer(s) is varied depending on each purpose of use. When the thickness is too small, the multilayer laminate cannot have satisfactory performance characteristics. Therefore, the thickness is preferably 0.2 mm or more, particularly preferably 0.5 mm or more.

The multilayer laminate used in the present invention can be produced by using as a starting material either at least one fiber-reinforced thermoplastic resin sheet called, for example, "stampable sheet" which is previously prepared by making a fiber-reinforced thermoplastic resin containing the above-mentioned reinforcing fiber into a sheet, or at least one web obtained as a semi-finished product in the course of producing such a sheet (the sheet and the web are hereinafter generically referred to as "fiber-reinforced thermoplastic resin sheet"), and bonding the fiber-reinforced thermoplastic resin sheet(s) to a metal plate with an adhesive or the like directly or through an intermediate layer. Most preferable is a process in which a fiber-reinforced thermoplastic resin sheet is laminated on one or each side of a metal plate by heat fusion of the thermoplastic resin in the sheet.

A typical example of the process using heat fusion is a process in which a metal plate which may be in a preheated state is placed on a fiber-reinforced thermoplastic resin sheet which have been previously heated in a heating oven set at a predetermined temperature to such an extent that the resin in at least the surface portion is melted to become sufficiently flowable, and the resulting assembly is compressed.

The heating temperature in this case is varied depending on the matrix resin in the fiber-reinforced thermoplastic resin sheet. For example, when the matrix resin is a polypropylene, the heating temperature is usually 160 - 230°C, preferably 180 - 220°C.

Usually, the compressive force in the above process is preferably 5 to 300 kg/cm², particularly preferably 10 to 200 kg/cm², for giving the resin a sufficient flowability and a sufficient adhesion to the surface of the metal plate.

The compression time is usually 10 to 300 seconds, preferably 30 to 200 seconds.

A multilayer laminate having a three-layer or higher-order structure can be produced, for example, by setting in a press molding machine a fiber-reinforced thermoplastic resin sheet previously heated to such an extent that the resin in at least the surface portion is melted to become sufficiently flowable, placing a metal plate on the sheet, placing on the metal sheet the same fiber-reinforced thermoplastic resin sheet as above which has been previously heated to such an extent that the resin in at least the surface portion is melted to become sufficiently flowable, and then compressing the resulting assembly.

As another production process, it is also possible to produce a multilayer molded plate by placing a metal plate and at least one fiber-reinforced thermoplastic resin sheet one upon another in a press molding machine so as to form a desired laminated structure, and then compressing the resulting assembly after or while heating the press molding machine to such an extent that the resin in the sheet(s) is melted.

When this process is employed, the heating temperature, the compressive force and the like are the same as above.

In these processes, when a metal plate and two fiber-reinforced thermoplastic resin sheets are set so that during the compression, the molten resins in the upper and lower sheets holding the metal sheet between them may flow to enable the upper and lower sheets to melt together directly at the end of the metal plate, there can be obtained a multilayer laminate in which not only the surfaces but also ends of the metal plate have been completely enveloped in a resin layer.

When the metal sheet is held between the sheets, making one or two small holes previously in the metal plate causes direct fusion of the resins in the upper and lower sheets through the holes, so that there can be obtained a multilayer laminate composed of the metal plate and the fiber-reinforced thermoplastic resin sheets more firmly laminated thereon.

Since the multilayer laminate used in the present invention is composed of a metal plate and a fiber-reinforced thermoplastic resin integrally laminated thereon, it has the following effects: although the thickness of a product itself is somewhat increased for attaining a required strength, the weight of the product can be reduced; and since the resin layer(s) on the metal surface is thick and tough, the multilayer laminate is free from the problems of rusting and corrosion and hence is stable for a long period of time.

Furthermore, since the resin layer(s) of the surface(s) of the multilayer laminate used in the present invention has various excellent properties, for example, sound-absorbing effect and sound-damping effect as performance characteristics of the fiber-reinforced thermoplastic resin itself, and a marked vibration-damping effect, the combination of properties of the metal plate and such properties of the resin layer(s) permits advantageous employment of the multilayer laminate as an acoustic insulation material, and vibration-damping board, which are excellent in mechanical strength.

Particularly when an insulating material such as glass fiber is used as the reinforcing fiber, the multilayer laminate of the present invention can be used for very various purposes, for example, it can be used also as an insulating structural material excellent in mechanical strength.

### [EXAMPLES]

The present invention is illustrated below in further detail with examples.

### Example 1

In a pressing machine were set 300 x 300 mm product-like sheets (webs) obtained in the course of producing stampable sheets with a basis weight of 1,000 g/m² composed of glass fiber containing 80% or more of glass fiber with a fiber length of 10 mm or more and a polypropylene resin in a wt% ratio of 4 : 6 (KP-sheet, a trade name, mfd. by K PLASHEET CORPORATION) and a 300 x 300 mm aluminum plate of 0.6 mm thickness having 9 circular holes with a radius of 5 mm located substantialy uniformly, in the following order: the web/the aluminum plate/the web. They were heated to 180°C while applying a surface pressure of 70 kg/cm².

The heated state was maintained for 60 seconds to obtain a three-layer laminate of 2.1 mm thickness having a structure of fiber-reinforced thermoplastic resin layer/aluminum plate/fiber-reinforced thermoplastic resin layer.

Physical properties of the obtained multilayer laminate are shown in Table 1.

### Comparative Examples 1 to 3

For comparison, there were used a common steel plate (SS41) (Comparative Example 1), an aluminum plate (Comparative Example 2) and the same KP-sheet as used in Example 1 (except in that its thickness was 4.4 mm). Their physical properties and chemical resistance were evaluated. The results are shown in Table 1 and Table 2.

### Example 2

Example 2 is not an example of the invention but illustrates the way how the properties of the laminate are determined.

A stampable sheet with a basis weight of 2,000 g/m² composed of glass fiber containing 80% or more of glass fiber with a fiber length of 10 mm or more and a polypropylene resin in a wt% ratio of 4 : 6 (KP-sheet, a trade name, mfd. by K-PLASHEET CORPORATION) was cut to dimensions of 250 x 250 mm. A common steel plate of 1.2 mm thickness was inserted between two of the sheets thus obtained, and they were set in a pressing machine and heated to 210°C while applying a surface pressure of 30 kg/cm². The heated state was maintained for 2 minutes to obtain a three-layer laminate of 4.5 mm thickness having a structure of fiber-reinforced thermoplastic resin layer/steel plate/fiber-reinforced thermoplastic resin layer.

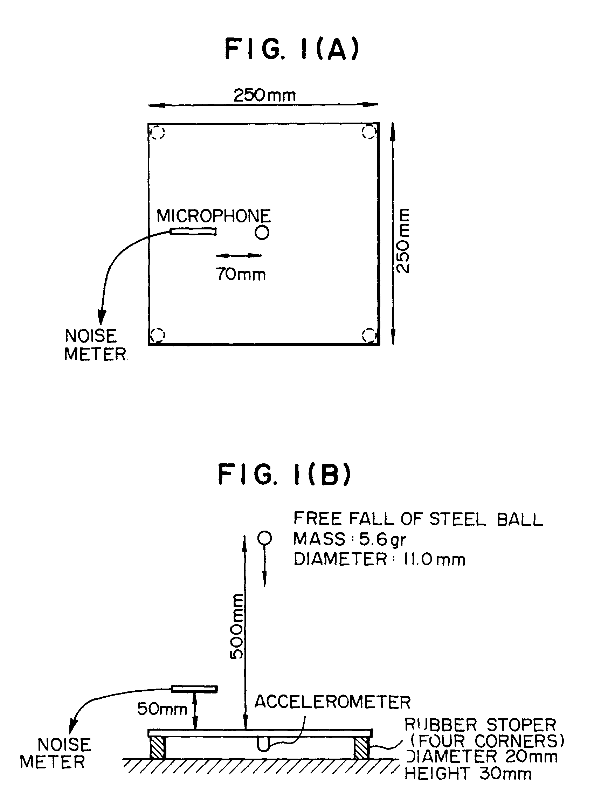

For the multilayer laminate obtained, noise level at impact and vibration damping rate were measured by means of the impact and vibration equipment shown in Fig. 1(A).

As schematically shown in Fig. 1(B), an impact was made by free fall of a steel ball with a diameter of 11.0 mm and a mass of 5.6 g from a height of 50 mm.

Noise was measured through a microphone placed in a predetermined position, and vibration was measured by means of an accelerometer attached to the side reverse to the impact portion.

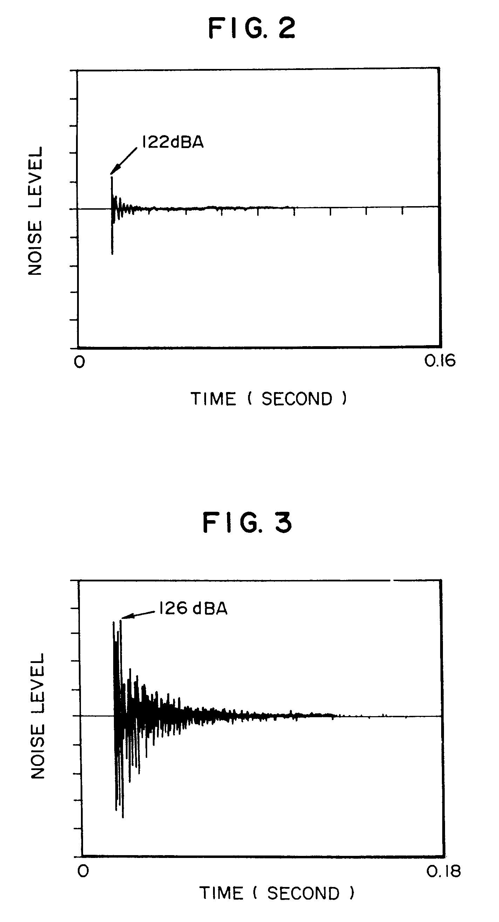

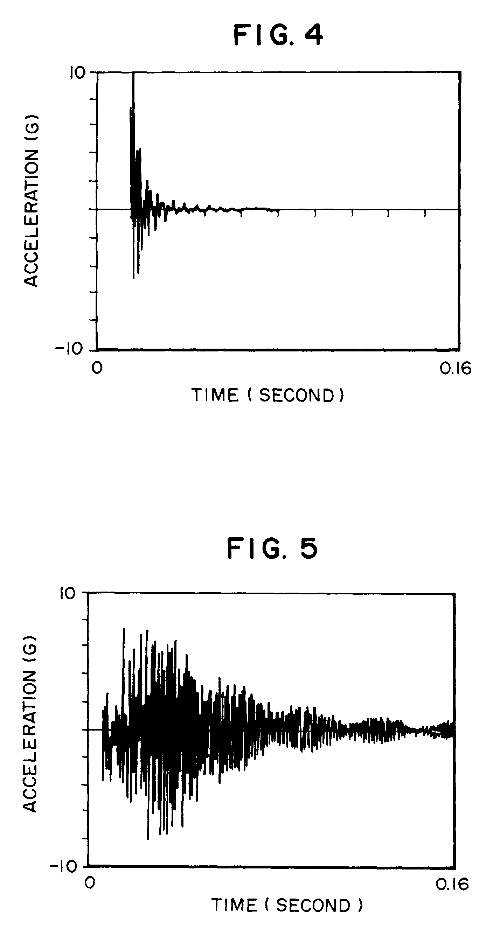

The results of measuring the noise level are shown in Fig. 2, and the damping rate of vibration in Fig. 4.

### Comparative Example 4

For comparison, the same tests as in Example 4 were carried out except for using a 250 x 250 mm common steel plate of 2.0 mm thickness.

The results of measuring the noise level are shown in Fig. 3, and the damping rate of vibration in Fig. 5.

**Table 1**

| Physical properties of multilayer laminates | | | | | |
|---|---|---|---|---|---|
| | Structure of laminate (Note 1) | Thickness (mm) | Specific gravity (g/cm³) | Flexural modulus (Note 2) | Specific stiffness (Note 3) |
| Example 1 | KP/aluminum plate/KP | 2.1 | 1.65 | 3,100 | 8.8 |
| Comparative Example 1 | Steel plate | 1.2 | 7.9 | 21,000 | 3.5 |
| Comparative Example 2 | Aluminum plate | 1.7 | 2.7 | 7,200 | 7.2 |
| Comparative Example 3 | KP | 4.4 | 1.2 | 420 | 5.8 |
| Note 1: KP denotes KP-sheet Note 2: kgf/mm² Note 3: stiffness per unit weight | | | | | |

**Table 2**

| Chemical resistance of multilayer laminate | | | |
|---|---|---|---|
| | Immersion in 30% hydro-chloric acid at 22°C for 7 days | Immersion in 50% sulfuric acid at 22°C for 7 days | Immersion in electrolysis solution for battery at 22°C for 7 days |
| Comparative Example 1 | A corroded portion appeared | Partly dissolved by corrosion | A corroded portion appeared on the surface |
| | Bubbles came out of the surface | | |

### INDUSTRIAL APPLICABILITY

The multilayer laminate used in the present invention is excellent in impact resistance, is free from the formation of pinholes, unlike coated metal plates, and is very rarely rusted by exposure of the surface of the metal layer due to a scratch on the resin layer inflicted by a slight impact, and hence it is of the greatest utility as a vibration-damping board and an acoustic insulation material.

## Claims

1. Use of multilayer laminate wherein the laminate, a fiber-reinforced thermoplastic resin layer containing reinforcing fiber is laminated on one or each side of a metal plate made of aluminum as a vibration-damping board and/or acoustic insulation material.

2. Use of multilayer laminate according to Claim 1, **characterized in that** the fiber-reinforced thermoplastic resin layer is laminated on each side of the metal plate.

3. Use of multilayer laminate according to Claim 1 or 2, wherein the reinforcing fiber is inorganic fiber.

4. Use of multilayer laminate according to Claim 3, wherein the inorganic fiber is glass fiber.

5. Use of multilayer laminate according to Claims 1 to 4, wherein the fiber length of the reinforcing fiber is 1 mm or more.

6. Use of multilayer laminate according to Claim 5, **characterized in that** the fiber length is 10 mm or more.

7. Use of multilayer laminate according to Claim 1 or 2, **characterized in that** the laminating is through heat fusion.

8. Use of multilayer laminate according to Claim 1 or 2, wherein the thickness of the fiber-reinforced thermoplastic resin layer is 0.2 mm or more.

9. Use of multilayer laminate as set forth in Claim 1, **characterized in that** it is produced by placing on one or each side of a metal sheet a fiber-reinforced thermoplastic resin sheet previously heated to such an extent that the resin in at least the surface portion is melted to become sufficiently flowable, and then compressing the resulting assembly.

10. Use of multilayer laminate as set forth in Claim 1, **characterized in that** it is produced by holding a metal sheet between two fiber-reinforced thermoplastic resin sheets previously heated to such an extent that the resin in at least the surface portion is melted to become sufficiently flowable, and then compressing the resulting assembly.

11. Use of the multilayer laminate according to Claim 9 or 10, wherein the thermoplastic resin is a polypropylene.

12. Use of the multilayer laminate according to Claim 11, wherein the heating temperature is 160 - 230°C.

13. Use of the multilayer laminate according to Claim 9 or 10, wherein the compressive force is 5 - 300 kg/cm².

## Patentansprüche

1. Verwendung eines Mehrschicht-Verbundstoffes als schwingungsdämpfende Platte und/oder schallisolierendes Material, wobei der Verbundstoff, eine faserverstärkte thermoplastische Harzschicht, die verstärkende Faser enthält, auf eine oder jede Seite einer Metallplatte aus Aluminium laminiert wird.

2. Verwendung des Mehrschicht-Verbundstoffes nach Anspruch 1, **dadurch gekennzeichnet, daß** die faserverstärkte thermoplastische Harzschicht auf jede Seite der Metallplatte laminiert wird.

3. Verwendung des Mehrschicht-Verbundstoffes nach Anspruch 1 oder 2, wobei die verstärkende Faser anorganische Faser ist.

4. Verwendung des Mehrschicht-Verbundstoffes nach Anspruch 3, wobei die anorganische Faser eine Glasfaser ist.

5. Verwendung des Mehrschicht-Verbundstoffes nach den Ansprüchen 1 bis 4, wobei die Faserlänge der verstärkenden Faser 1 mm oder mehr beträgt.

6. Verwendung des Mehrschicht-Verbundstoffes nach Anspruch 5, **dadurch gekennzeichnet, daß** die Faserlänge 10 mm oder mehr beträgt.

7. Verwendung des Mehrschicht-Verbundstoffes nach Anspruch 1 oder 2, **dadurch gekennzeichnet, daß** die Laminierung durch thermisches Verschmelzen erfolgt.

8. Verwendung des Mehrschicht-Verbundstoffes nach Anspruch 1 oder 2, wobei die Dicke der faserverstärkten thermoplastischen Harzschicht 0,2 mm oder mehr beträgt.

9. Verwendung des Mehrschicht-Verbundstoffes nach Anspruch 1, **dadurch gekennzeichnet, daß** er dadurch hergestellt wird, daß man auf eine oder jede Seite einer Metallplatte eine faserverstärkte thermoplastische Harzplatte legt, die zuvor in einem solchen Maß erhitzt wurde, daß das Harz zumindest im Oberflächenbereich schmilzt, um ausreichend fließfähig zu werden, und daß man die resultierende Anordnung anschließend presst.

10. Verwendung eines Mehrschicht-Verbundstoffes nach Anspruch 1, **dadurch gekennzeichnet, daß** er dadurch hergestellt wird, daß man eine Metallplatte zwischen zwei faserverstärkten thermoplastischen Harzplatten hält, die zuvor in einem solchen Maß erhitzt wurden, daß das Harz zumindest im Oberflächenbereich schmilzt, um ausreichend fließfähig zu werden, und daß man die resultierende Anordnung anschließend presst.

11. Verwendung des Mehrschicht-Verbundstoffes nach Anspruch 9 oder 10, wobei das thermoplastische Harz ein Polypropylen ist.

12. Verwendung des Mehrschicht-Verbundstoffes nach Anspruch 11, wobei die Erwärmungstemperatur 160 bis 230°C beträgt.

13. Verwendung des Mehrschicht-Verbundstoffes nach Anspruch 9 oder 10, wobei die Druckkraft 5 bis 300 kg/cm² beträgt.

## Revendications

1. Utilisation d'un stratifié multicouche, stratifié dans lequel une couche de résine thermoplastique renforcée par fibre contenant une fibre de renforcement est stratifiée sur un coté ou chaque coté d'une plaque métallique constituée d'aluminium en tant que panneau d'amortissement de vibrations et/ou matériau d'isolation acoustique.

2. Utilisation d'un stratifié multicouche selon la revendication 1, **caractérisée en ce que** la couche de résine thermoplastique renforcée par fibre est stratifiée sur chaque coté de la plaque métallique.

3. Utilisation d'un stratifié multicouche selon la revendication 1 ou 2, dans laquelle la fibre de renforcement est une fibre inorganique.

4. Utilisation d'un stratifié multicouche selon la revendication 3, dans laquelle la fibre inorganique est une fibre de verre.

5. Utilisation d'un stratifié multicouche selon les revendications 1 à 4, dans laquelle la longueur de fibre de la fibre de renforcement est de 1 mm ou plus.

6. Utilisation d'un stratifié multicouche selon la revendication 5, **caractérisée en ce que** la longueur de fibre est de 10 mm ou plus.

7. Utilisation d'un stratifié multicouche selon la revendication 1 ou 2, **caractérisée en ce que** la stratification est effectuée par fusion thermique.

8. Utilisation d'un stratifié multicouche selon la revendication 1 ou 2, dans laquelle l'épaisseur de la couche de résine thermoplastique renforcée par fibre est de 0,2 mm ou plus.

9. Utilisation d'un stratifié multicouche selon la revendication 1, **caractérisée en ce qu'**il est produit en plaçant sur un coté ou chaque coté d'une feuille métallique, une feuille de résine thermoplastique renforcée par fibre chauffée au préalable sur une étendue telle que la résine, dans au moins la partie de surface, est fondue pour pouvoir s'écouler suffisamment, et ensuite en comprimant l'ensemble résultant.

10. Utilisation d'un stratifié multicouche selon la revendication 1, **caractérisée en ce qu'**il est produit en supportant une feuille métallique entre deux feuilles de résine thermoplastique renforcée par fibre chauffées au préalable sur une étendue telle que la résine, dans au moins la partie de surface, est fondue pour pouvoir s'écouler suffisamment, et ensuite en comprimant l'ensemble résultant.

11. Utilisation du stratifié multicouche selon la revendication 9 ou 10, dans laquelle la résine thermoplastique est un polypropylène.

12. Utilisation du stratifié multicouche selon la revendication 11, dans laquelle la température de chauffage est comprise entre 160 et 230°C.

13. Utilisation du stratifié multicouche selon la revendication 9 ou 10, dans laquelle la force de compression est comprise entre 5 et 300 kg/cm².
